Europäisches Patentamt

(19) European Patent Office

Office européen des brevets

(11) Publication number: **0 057 815**
**B1**

# (12) EUROPEAN PATENT SPECIFICATION

(45) Date of publication of patent specification: **20.04.88**

(51) Int. Cl.⁴: **G 06 F 12/06**

(21) Application number: **82100159.1**

(22) Date of filing: **12.01.82**

(54) Page addressing mechanism and method for using the same.

(30) Priority: **05.02.81 US 231639**
**05.02.81 US 231653**

(43) Date of publication of application:
**18.08.82 Bulletin 82/33**

(45) Publication of the grant of the patent:
**20.04.88 Bulletin 88/16**

(84) Designated Contracting States:
**DE FR GB IT**

(56) References cited:
US-A-3 972 025
US-A-4 037 211
US-A-4 042 913
US-A-4 118 773

ELECTRONIQUE ET APPLICATIONS
INDUSTRIELLES, vol. 261, 1st December 1978,
pages 29-31, Paris, FR; J.-C. MATHON: "La
banque de données à microprocesseur"

(73) Proprietor: **International Business Machines Corporation**
**Old Orchard Road**
**Armonk, N.Y. 10504 (US)**

(72) Inventor: **Bradley, David John**
**20839 Sonrisa Way**
**Boca Raton Florida 33433 (US)**
Inventor: **Gibbs, Dennis Darrell**
**3465 NE 31st Ave.**
**Lighthouse Point Florida 33064 (US)**
Inventor: **Kostuch, Donald James**
**1340 SW 16th St.**
**Boca Raton Florida 33432 (US)**
Inventor: **Martin, James Stuart**
**9048 NW 20th Manor**
**Coral Springs Florida 33065 (US)**
Inventor: **Eggebrecht, Lewis Clark**
**7355 Estrella Court**
**Boca Raton Florida 33433 (US)**

(74) Representative: **Bonneau, Gérard**
**Compagnie IBM France Département de Propriété Intellectuelle**
**F-06610 La Gaude (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to memory addressing and, more particularly, to apparatus and method for accessing an amount of memory greater than can be normally accessed using a given size address bus.

It is well known from the prior art that one can increase the size of the memory addressed by an address bus carrying N bits of information from the normal $2^N$ locations to some multiple of $2^N$ by utilizing the technique of paging. This technique generally is implemented by providing a large memory having pages broken into $2^N$ addressable segments and further providing an external register which can be set by a processing unit to provide a given code selecting one of the various pages. An example of such a system is shown in the document US—A—4,037,211 to Ikuta et al, granted July 19, 1977. In this patent, a single register is provided to enable one of the several pages of the memory. Each time a memory operation on a new page is to occur, it is necessary to reset the single register. For instance, if it is desired to read information from one page of the memory and store it into a different page of the memory, the page register will have to be set before each read and each write. Thus, what normally would be a simple sequence of read from one location and write to another location requiring two instructions would require four instructions. Specifically, it would be necessary to set the page register, read the information, set the page register and write the information. The prior art paging technique becomes more cumbersome in those systems organized such that one or more pages of the memory are dedicated to storing program instructions, such as in read only memory, and other pages of the memory are dedicated to being used as general purpose random access memory. In this case, it would be necessary to set the page register first to obtain the instruction, then set it a second time to read information from the random access memory and then set the page register a third time to write information into a different portion of the random access memory.

A system partially obviating such drawbacks is described in US—A—4042 913. This patent relates to instruction operated controls for loading or storing address key values into or from one or more address key register sections of an address key register, from or to a word in either a main memory or a general purpose register. There is a separate key register section for each of the storage access types designed in the system, thereby providing the capability for obtaining separate addressability in the main memory for each of the different types of storage accesses.

In utilizing a paged memory scheme to its fullest advantage, some easy and simplified procedure must be established to allow for the orderly and automatic transfer of addressing from one page to another. For instance, in a typical program, a basic system operating loop will exist which, in response to various external events such as the depression of a key on a keyboard or the request for more information to be printed by a printer, will cause departures from the basic loop. Typically, the program governing the result desired for any one departure will be contained as a separate program module which physically exists in a different page than the basic loop. In preparing the program, programmers typically prepare each group of instructions constituting a program module separate and apart from one another. Not until the programming has been completed is each of the program modules stored in memory. The precise organization of the memory and the modules will depend on the size of each individual module. For example, for large program modules, it may be possible to store only a relatively few in a page of memory. On the other hand, for short modules, a large number can be stored on each page. In practice, both large and some small modules are assigned to each page so that the maximum possible locations per page are utilized.

During the initial programming, the programmer is unable to determine precisely which page a program module will be assigned and hence the programmer cannot program in the necessary page enabling codes needed to transfer program control from one module to another. Accordingly, some scheme must be developed to allow this to be easily and automatically accomplished, irrespective of where the program modules are ultimately placed. During the programming process, all that can be required of the programmer is to cause a transfer from one identified (by name or identification number) program module to another identified program module without considering the location of either. One way to do this is to utilize a table storing the program names by identification number together with an associated page number and address within the page in a master table for the identified program.

The object of the invention is therefore a page addressing mechanism in a computer system having memory means divided into addressable pages, and a processing unit which provides control signals manifesting a type of memory operation to be performed, said page addressing mechanism including addressing means for addressing the pages of said memory means, a plurality of register means each of which is separately programmable by the processing unit to store data capable of being selectively provided as page signals for selecting one page of the memory means, each of the register means being associated with a distinct type of memory operation, and decoding means responsive to the control signals for selecting one of said register means to be enabled to provide the page signals.

The memory means comprises a first portion of random access memory formed of a first plurality of pages, and a second portion of read only memory formed of a second plurality of pages for storing a plurality of program modules each of which being identified by a program module identification code. Each page of the read only memory includes at least one page section comprising a page table with a plurality of entries, each entry containing one program module identification code in that section and a code manifesting the address in that section for that one program module, and a page of said random access memory includes a transfer vector table which is addressed in accordance with the identification code of each program module and includes a pointer to the page section in which the program module having the identification code resides, whereby a pointer for an identification code of a program module different from the program module currently executed can be looked up to obtain the address of this different program module and to select the page of the read only memory in which the different program module resides.

In utilizing this mechanism, a programmer now need only assign an arbitrary identification code to each program module and then provide the appropriate transfer, by way of, for instance, call or jump instruction, to the coded identification number. Other program modules within the total program can then utilize the tables provided (which identify the location of the program module) to cause a transfer to that module. This greatly simplifies the programmer's task in preparing the program and provides an automatic mechanism to allow the transfer from one program module to another before all of the individual program modules are known or their specific addresses in the program storage means are determined.

One preferred embodiment of this invention is hereinafter described with reference being made to the following drawings in which:

Figure 1 is a block diagram showing the addressing apparatus for addressing a page memory.

Figure 2 shows in more detail the central processor unit and the paged bit generating means of the addressing circuit shown in figure 1.

Figure 3 shows in more detail the read only memory and the address decoding circuit therefore, shown in figure 1.

Figure 4 shows in more detail the random access memory and controller and decoding circuit therefore shown in figure 1.

Figure 5 shows a page table entry.

Figure 6 shows the organization of the page table within one page section.

Figure 7 shows a transfer vector table entry.

Figure 8 shows a flow diagram representing a series of operations performed for building the transfer vector table.

Figure 9 shows a flow diagram representing a series of operations performed in scanning the page table in each page section of program storage memory; and

Figure 10 shows a flow diagram for a sequence of operations allowing for the transfer from one program module to another.

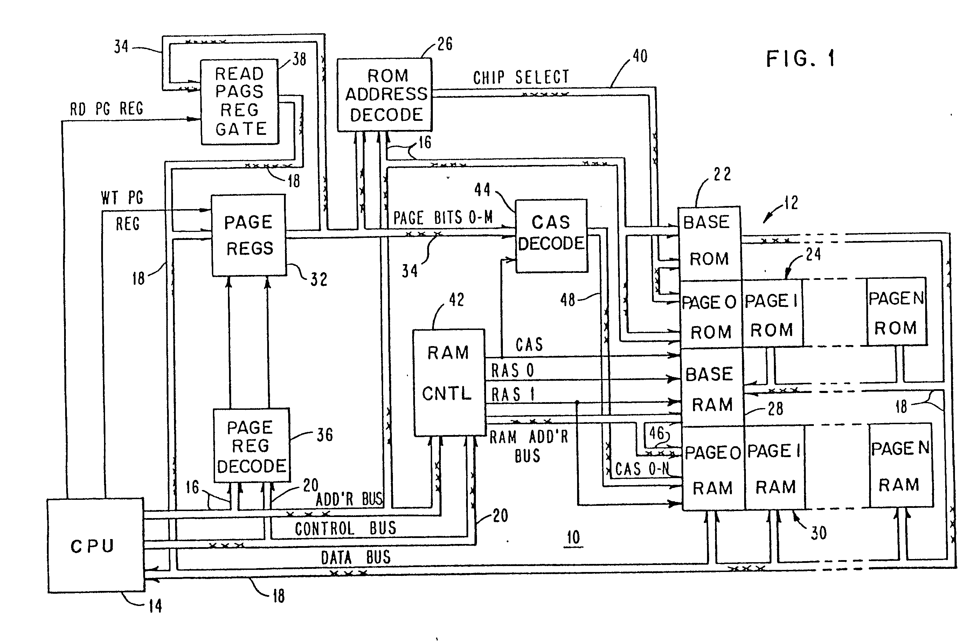

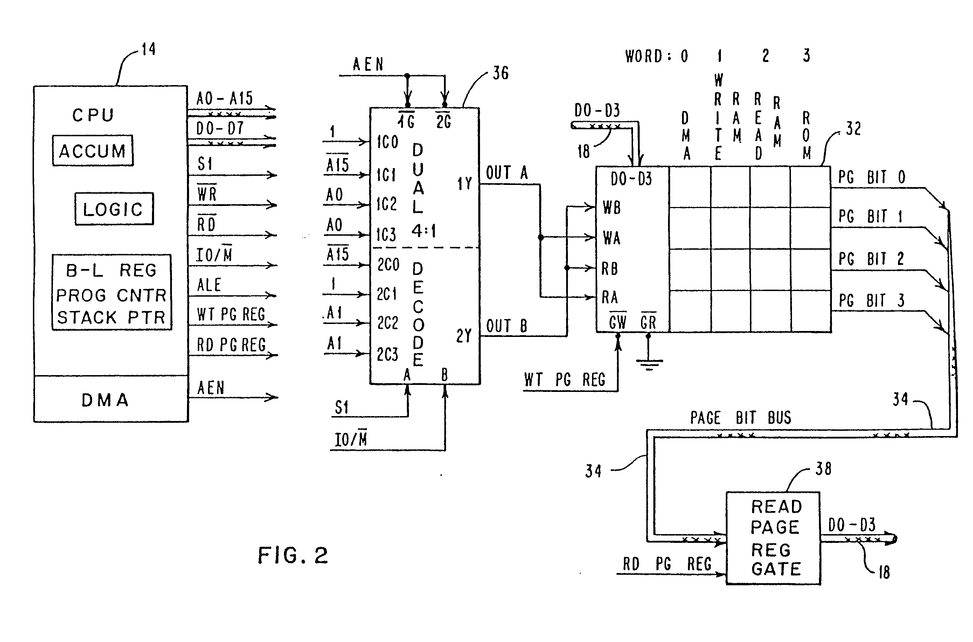

Referring now to figure 1, paging apparatus is shown and is used for addressing a paged memory 12 in response to signals provided from a central processing unit (CPU) 14. CPU 14 provides signals over an address bus 16, a data bus 18 and a control bus 20. The address bus 16 contains sixteen lines, whereby CPU 14 can directly address 65,536 (64K) locations of memory. As described herein, each location will be considered to be the equivalent of eight binary digits (bits) or, one byte, of information. Data bus 18 consists of eight lines used for carrying eight bits, or one byte, of information between CPU 14 and memory 12, as well as between CPU 14 and other portions of addressing apparatus 10 requiring data to be provided hereto or which provides data to be sent to CPU 14. Control bus 20 consists of a plurality of lines which signify different operations which are to be performed by CPU 14. For instance, if memory 12 is to be read, one set of signals will appear on control bus 20, whereas if the information on data bus 18 is to be written into memory 12, a different set of signals will appear on control bus 20. The detailed description of the various signals appearing on control bus 20 will be described hereafter when a more specific description of CPU 14 is given in figure 2.

Memory 12 consists of read only memory (ROM) and random access memory (RAM), each addressable within the 64K adressing space of address bus 16. The first 32K address space is used for read only memory in which the various program modules are stored. The read only memory is further broken down into unpaged, or base, ROM 22 contained within the first 16K address locations and paged ROM 24 contained within the address locations between 16K and 32K. The paged ROM 24 is divided into zero through N pages of 16K bytes each. At any given time only one of the zero through N pages will be enabled by chip select signals applied thereto from ROM address decode circuit 26.

The random access memory is organized similar to the read only memory in that unpaged base RAM 28 exists from the address locations from 32K to 48K and zero through N pages of paged RAM 30 exists from locations 48K through 64K. With regard to the paged RAM 30, at any given time only one of the pages may be selected. This selected page will respond to address signals on address bus 16 from 48K through 64K. It should be noted that any address signal between 32K and 48K will automatically address base RAM 28.

The particular one of the pages selected from paged ROM 24 or paged RAM 30 is determined by the signal at the output of page registers 32. This signal, referred to as Page Bits 0 through M is provided from one of a plurality of selected page registers within page registers 32 over page bits bus 34. The number of page bits, M+1, provided from page register 32 will determine the number of possible pages of each of paged ROM 24 and paged RAM 30. For instance, if M is equal to seven, whereby eight page bits are provided, then the number of pages will be 256 or, if M is equal to three, whereby four page bits are provided, the number of pages of paged ROM 24 or paged RAM 30 will be sixteen. For the embodiment described herein in figures 2—4, M is selected to be three.

Page registers 32 may consist of a plurality of registers, each of which is assigned to a different function to be performed by CPU 14. For instance, if an operation fetch function is performed by CPU 14, whereby a program instruction is read from paged ROM 24, one of the registers in page registers 32 will be enabled to provide the page bits on bus 34. Separate registers within page registers 32 are also provided for the operations of reading from the paged RAM 30, writing into the paged RAM 30 and DMA operations in which a Direct Memory Access (DMA) controller is utilized to read or write from paged RAM 30. Of course, page registers 32 may include additional registers for other functions desired to be performed by CPU 14.

Page registers 32 respond to signal provided thereto from data bus 18 and to a write page register signal (WT PG REG) provided by CPU 14. In addition, register selection signals are provided to select one of the plurality of registers within page registers 32 from page register decode circuit 36. The selection signals from page register decode 36 will select one of the registers within page registers 32 to provide data on to page bits bus 34. If the WT PG REG signal from CPU 14 is active, the data appearing on data bus 18 will be written into the selected register in page register 32.

CPU 14 can also read the signals provided by page registers 32 by the provision of the read page register signal (RD PG REG) to enable the read page register gate 38. Read page register gate 38 responds to the page bit signals on page bit bus 34 and provides these signals back to data bus 18 when the gates therein are enabled by the RD PG REG signal from CPU 14.

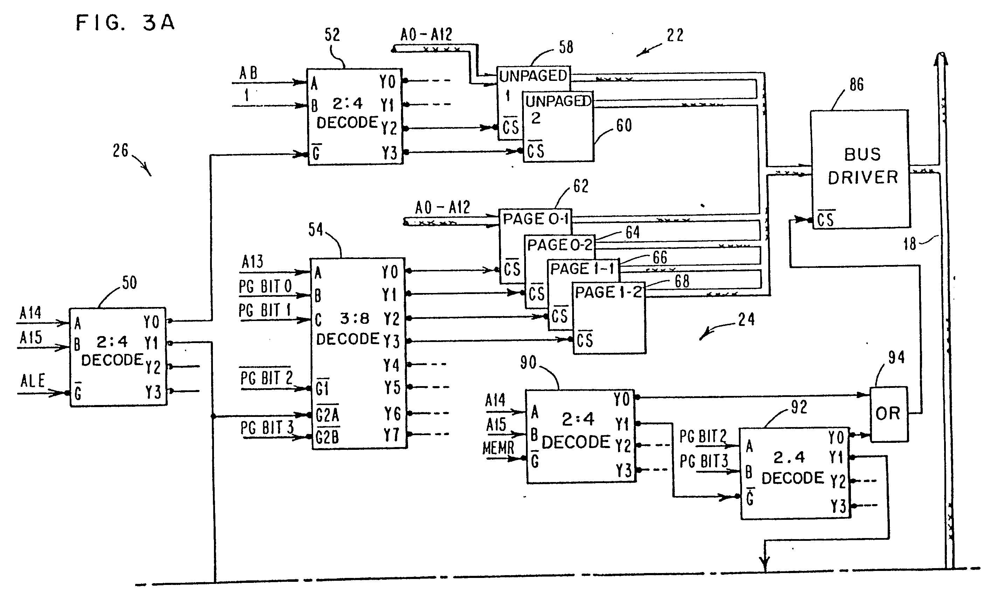

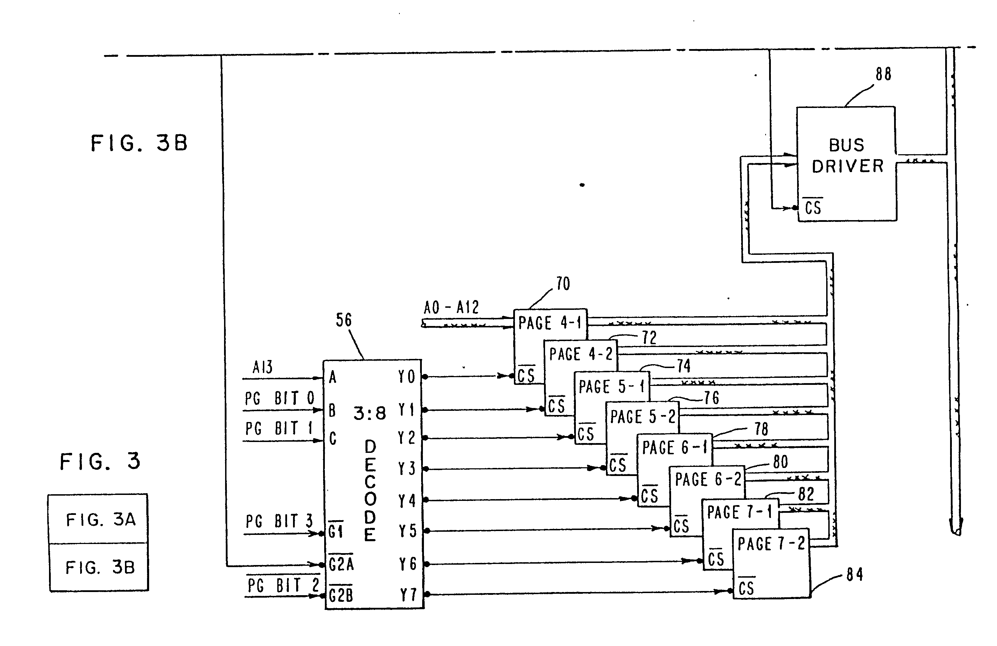

The selection of either the base ROM 22 or one page of the paged ROM 24 is controlled by the ROM address decode circuit 26. ROM address decode 26 responds to signals on address bus 16 and the page bits on page bit bus 34 to provide one active chip select signals on chip select bus 40 to enable at least a portion of one of either the base ROM 22 or one page of paged ROM 24 to respond to the address signals on address bus 16. The exact operation of this will be explained in more detail with respect to figure 3.

The selection between base RAM 28 and pages RAM 30 is controlled by RAM controller 42 and column address strobe (CAS) decode 44. RAM controller 42 responds to the signals on address bus 16 and control bus 20 and provides a CAS signal, two row address strobe (RAS) signals RAS0 and RAS1, and seven RAM address signals (RAM A0—A6) over RAM address bus 46. The CAS signal and the page signals on page bit bus 34 are applied to CAS decode 44 which provides the CAS0 through N signals over CAS bus 48.

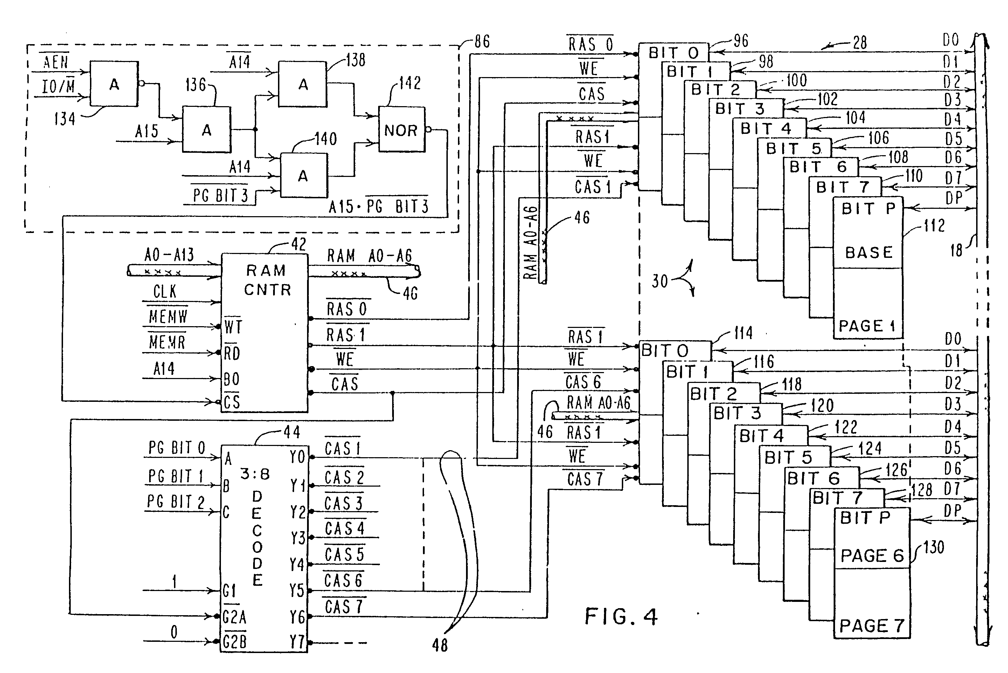

The CAS, RAS0, RAS1 and the RAM address bus 46 signals are applied to base RAM 28 and the RAS1, the CAS bus 48 and the RAM address bus 46 signals are applied to the paged RAM 30 to select at least a portion of one of the RAM pages and address one location within that page. The details of the addressing scheme of the RAM is described in more detail in figure 4.

Referring now to figure 2. A more detail diagram of CPU 14, page register decode 36, page registers 32, and read page register gate 38 is shown. CPU 14 consists of a microprocessing unit and a DMA device.

The microprocessor includes an accumulator, or A, register and six other temporary storage registers which are identified as the B, C, D, E, H and L registers. These registers can be used individually or in groups of two, such that B and C registers form one group, the D and E registers form a second group, and the H and L registers form a third group. In addition, there is a program counter, stack pointer and conventional computer logic in the microprocessor.

The microprocessor part of CPU 14 provides a sixteen bit address signal over the address bus 16. The addresss signals are respectively labeled A0 through A15. In addition, an eight bit data signal is provided over data bus 18 and the eight data bits are labeled respectively D0 through D7. The control bus 10 from CPU 14 consists of at least the S1, the IO/$\overline{M}$, and ALE signals. More specifically, the S1 signal is a data bus status signal and when it is in a logic "0" state, it indicates that either a halt or write function is occurring and when it is in a logic "1" state, it indicates that a read or fetch function is occurring. Similarly the IO/$\overline{M}$ signal indicates whether the read/write function is directed to memory or to an Input/Output (I/O) device. When IO/$\overline{M}$ signal is logic "1", the information on the data bus is designated for an I/O device and when the IO/$\overline{M}$ signal is logic "0", the information on the data bus is designated for the memory. It should be noted that the IO/$\overline{M}$ signal is in the high impedance state during the hold or halt instructions. The ALE signal is an address latch enable signal which occurs during the first clock cycle of a machine state and enables the address to be latched. As used for the present invention, the ALE signal is for the purpose of specifying when the sixteen bits on address bus 16 are all valid.

In addition, the microprocessor part of CPU 14 provides conventional read ($\overline{RD}$), and write ($\overline{WR}$) control signals. Input output device addressing circuitry can be included within CPU 14 to respond to the $\overline{RD}$ and $\overline{WR}$ signals to provide the RD PG REG and WT PG REG signals. The output from the DMA portion of CPU 14 is the AEN signal which signifies that a DMA transfer is occurring. Normally this signal is logic "0", but becomes logic "1" during a DMA operation and is used to disable the system data and control buses during the DMA operation.

Page register decode 36 is a conventional dual four-to-one decoder. Specifically, each of the two four-to-one decode circuits have four signals

applied to the C0 through C3 inputs and provide one of those four signals at the Y output thereof, so long as the strobe signal of G input has a logic "0" signal applied thereto. The particular one of the input signals applied to the output depends upon the state of the signals applied to the select, or A and B, inputs. Specifically, if the two signals applied to the A and B inputs are both logic "0", the C0 input signal is applied as the Y output signal. If the signals applied to the A and B inputs are respectively logic "1" and logic "0", then the C1 input signal becomes the Y output signal. If the signals applied to A and B inputs are respectively logic "0" and logic "1", then the C2 input signal becomes the Y output signal and if both the A and B signals are logic "1", then the C3 input signal becomes the Y output signal. As coupled in page register decode circuit 36, two four-to-one decode circuits are utilized. The 1C0 through 1C3 inputs of the upper four-to-one decode circuit are respectively coupled to a logic "1" signal, the $\overline{A15}$ signal, the A0 signal, and the A0 signal. The lower four inputs; 2C0 through 2C3, are respectively coupled to the $\overline{A15}$ signal, a logic "1" signal, the A1 signal and the A1 signal. The strobe signal $\overline{1G}$ and $\overline{2G}$ for both portions are connected to the AEN signal from the DMA portion of CPU 14 and the A and B select signals are respectively coupled to the S1 and IO/$\overline{M}$ signal from the microprocessor portion of CPU 14. The Y output of the upper four-to-one decode circuit is labeled the OUT A signal and the Y output from the lower portion of the four-to-one decode circuits· is labeled the OUT B signal.

Page registers 32 of 4×4 register file. Briefly, page registers 32 consists of a sixteen bit register file organized as four words of four bits each and further consists of on chip decoding providing for the addressing the four word locations in either a write in or read out mode. This permits simultaneous writing into one location and reading from another location, if desired.

The four low order data bus 18 bits D0 through D3 are applied to the data input of page registers 32. In addition, six control signals are applied to inputs, respectively labeled WB, WA, RB RA, $\overline{GW}$ and $\overline{GR}$. The signal applied to the WA and WB inputs control which one of the four words will have new data written therein as long as an active logic "0" signal is applied to the $\overline{GW}$ input. The signals applied to the RA and RB inputs control which one of the four words will be read whenever an active logic "0" signal is applied to the $\overline{GR}$ input. As seen in figure 2, the $\overline{GR}$ input is placed at a logic "0" state by grounding and thus at any given time, one word consisting of four bits will always be read and applied as the PG BIT 0 through 4 signals on page bit bus 34.

In operation, if logic "0" signals are applied to both the WA and WB inputs and the $\overline{GW}$ inputs is at logic "0", the word 0 contained within the 4×4 file of page registers 32 will have the data applied over lines D0 through D3 of data bus 18 written therein. As shown schematically, in figure 2, word zero is in the left-most word and, as will be explained hereafter, is designated as the DMA page register. Similarly, if WA is logic "1" and WB is logic "0", then word 1 will have data written therein; if WA is logic "0" and WB is logic "1", word 2 will have data written therein; and if both WA and WB are logic "1", word 3 will have the data written therein. Again, as will be explained in more detail hereafter, Word 1 is designated as the Write RAM page register Word 2 is designated as the Read RAM register, and Word 3 is designated as the ROM page register. In writing, it should be noted that it is always necessary to apply a logic "0" signal to the $\overline{GW}$ output or the signals applied to the WA and WB inputs will be ignored.

Since the $\overline{GR}$ input is connected to ground, or logic "0", the signals applied to the RA and RB inputs will cause one of the four 4 bit words contained in the 4×4 file of page registers 32 to always be read. Thus, a 4 bit signal will always be applied as the PG BIT 0—3 signals on bus 34. Again, if both RA and RB are logic "0", then word 0 or the DMA page register, is read. If RA is logic "1" and RB is logic "0" then word 1 or the Write RAM page register is read. If RA is logic "0" and RB is logic "1", the word 2, or the Read RAM page register, is read. And finally, if both RA and RB inputs have logic "1" signal supplied thereto, then the word 3, or the ROM page register, is read.

Four page bits from the particular one of the four words of the 4×4 file containing page registers 32 are applied as the PG BIT 0—3 signals on page bits bus 34. Each line of bus 34 is applied as one input to one of four gates within read page register gate 38. The other input of each gate has applied thereto the RG PG REG signal from CPU 14 to enable the gates to provide the PG BIT 0—3 signals to the data bus 18. Thus, read page register gate 38 allows CPU 14 to read the page signal information read from page registers 34.

The RA and WA inputs to page registers 32 are both connected to the OUT A signal from page register decode 36. The RB and WB inputs to page registers 32 are both connected to the OUT B output from page register decode 36. Connected in this manner, the signals at the outputs of page register decode 36 control the particular word which is read from the page registers 32 and applied to page bit bus 34 as the PG BIT 0—3 signals. The OUTA and OUTB signals from page register decode 36 will each be one of the signals applied to the C0, C1, C2 or C3 inputs of the two parts of page register decode 36, depending on the state of the S1 and IO/$\overline{M}$ signals applied to the A and B inputs of the AEN signal applied to the $\overline{1G}$ and $\overline{2G}$ inputs. In the case of a DMA operation, the AEN signal becomes logic "1", thereby causing the OUTA and OUTB signals to both become logic "0". These signals, when applied to the RA and RB inputs of page registers 32, cause the DMA page register, or word 0, to be read and the bits stored therein become the PG BIT 0—3 signals applied to page bit bus 34.

In the event it is desired to write information into the random access memory, the S1 signal becomes logic "0" and the IO/$\overline{M}$ signal is logic "0". In this event, the C0 inputs to both portions of the four-to-one decode circuits making up page register decode 36 become the OUTA and OUTB signals. In other words, the OUTA becomes logic "1" and the OUTB signal becomes the value of signal $\overline{A15}$ which is the complement of the signal on address line 15. In the case of the random access memory, the organization is such that the $\overline{A15}$ signal will be logic "0" when this part of the memory is accessed. Thus, the OUTB signal will be logic "0" for a write to RAM memory operation. This, in turn, makes the RA signal logic "1" and the RB signal logic "0" and, hence, word 1 or the Write to RAM page register is selected to be read and provide the PG BIT 0—3 to the page bits bus 34.

For a read from memory operation, the S1 signal is logic "1" and the IO/$\overline{M}$ signal is logic "0". In this case, the C1 input to the two parts of the dual four-to-one decode circuit within page register decode 36 is selected and the OUTA signal becomes $\overline{A15}$ signal and the OUTB signal becomes a logic "1". If the read is from the random access memory, $\overline{A15}$ is logic "0" and, hence, word 2, or the read from RAM, of page registers 32 will be selected. On the other hand, if the read is from the ROM part of the memory, the $\overline{A15}$ signal will be logic "1" and, hence, word 3, or the ROM page register, will be selected.

Connected in this manner, it is seen that the sequence of operations such as reading a program instruction from the ROM followed by a reading of data from one page of the RAM and writing of data into a different page of the RAM, can automatically occur without the necessity of setting a page register between each instruction. In other words, the ROM page register, the Read RAM page register and the Write RAM page register are all initially set and then the sequence of operations just described is expected and automatically causes the appropriate page bits to be provided for the desired function. In this same manner, if a DMA operation is included, a separate set of page bits can be provided in the DMA page register, thereby eliminating the requirement of resetting that page register each time a DMA operation occurs.

Whenever it is desired to write new information into the page registers 32 or for CPU 14 to read the information stored by page registers 32, page registers 32 are treated as an input-output, or I/O device. In this case, the IO/$\overline{M}$ signal becomes logic "1" and the S1 signal will be logic "0" or logic "1" depending upon whether information is being written into or read from page registers 32. In either case, the OUTA signal becomes the A0 address signal and the OUTB signal becomes the A1 address signal. By appropriately addressing page registers 32 with the A0 and A1 address signals, either of the four words can be read or written over, in conjunction with the provision of the WT PG REG signal or the RD PG REG signal from CPU 14.

Referring now to figure 3, a more detailed diagram of the ROM address to decode circuit 26 is shown in conjunction with the base ROM 22 and the paged ROM 24 of the memory 12. ROM address decode 26 includes a pair of two-to-four decode circuits 50 and 52 and a pair of three-to-eight decode logic circuits 54 and 56. As shown in figure 3, only pages 0, 1, 4, 5, 6 and 7 are shown for pages ROM 24, it being understood that any number of pages up to sixteen can be used. As previously explained with respect to figure 1, the unpaged ROM 22 includes 16K bytes in address space 0—16K and each page of the paged ROM 24 of the ROM memory includes 16K bytes in address space 16K—32K. However, in actually constructing the system, two circuit modules of 8K bytes may be used for the unpaged ROM 22 and for each page of the paged ROM 24. Thus, the unpaged ROM 22 includes first section 58 and second section 60, each of which are 8K bytes in size. Similarly, page 0 of the paged ROM 24 includes section 62 and section 64. The same is true for each of the other pages wherein page 1 includes sections 66 and 68, page 4 includes sections 70 and 72, page 5 includes sections 74 and 76, page 6 includes sections 78 and 80 and page 7 includes sections 82 and 84.

Two-to-four decode circuit 52 is utilized to select which of the two sections 58 or 60 of the unpaged ROM 22 is to be addressed by the A0 through A12 address signals. Three-to-eight decode circuit 54 is utilized to select which one of the four sections 62, 64, 66 and 68 of pages 0 and 1 are to bs addressed by the address signals A0 through A12 on address bus 16. Three-to-eight decode circuit 56 is utilized to determine which one of the sections 70, 72, 74, 76, 78, 80, 82 and 84 of pages 4, 5, 6 or 7 are to be addressed by the address signals A0 through A12 on address bus 16.

Two-to-four decode circuit 50 is utilized to select whether unpaged ROM 22 or pages ROM 24 is to be addressed. The A and B inputs to two-to-four decode circuit 50 are respectively coupled to the A14 and A15 signals provided over address bus 16. The $\overline{G}$ or enable, input to two-to-four decode circuit 50 is connected to the ALE signal provided from CPU 14 at the beginning of each cycle of operation of CPU 14. When both the A14 and A15 signals are logic "0", the Y0 output from two-to-four decode circuit 50 becomes logic "0"; otherwise, it is logic "1". When the A14 signal is logic "1" and the A15 signal is logic "0", the Y1 output from two-to-four decode circuit 50 becomes logic "0"; otherwise, it is logic "1". The Y2 and Y3 outputs from two-to-four decode circuit 50 are unconnected, as shown in figure 3. The Y0 output from two-to-four decode circuit 50 is coupled to the $\overline{G}$, or enable, input of two-to-four decode circuit 52. Whenever the Y0 signal from two-to-four decode circuit 50 is logic "0", two-to-four decode circuit 52 is enabled. The A and B inputs of two-to-four decode circuit 52 are respectively coupled to the A13 address signal and to a logic "1" signal. When two-to-four decode circuit 52 is enabled and if the A13 signal applied to the A input is a logic "0", then the Y2 output from two-to-four decode circuit 52 becomes logic "0". If the A13 signal is a logic "1", the Y3 output from two-to-four decode circuit 52 becomes a logic "0". The Y2 signal from circuit 52 is provided to the chip select input of section 58 of unpaged ROM 22 and the Y3 output from circuit 52 is applied to the chip select input of section 60 of unpaged ROM 22. Whenever a logic "0" signal is applied to the chip select input of one of the ROM sections 58, 60, that particular section is enabled to respond to the address signals A0 through A12 on address bus 16. In response to these address signals and the chip select enabling signal, eight bits of data contained in the address location are provided at the output of the enabled section.

The Y1 output of two-to-four decode circuit 50 is coupled to the $\overline{G2A}$ inputs of both three-to-eight decode circuits 54 and 56. In addition, the A, B and C inputs to each of circuits 54 and 56 are respectively coupled to the A13 address signal and the PG BIT0 and PF BIT1 page bit signals from page registers 32. The $\overline{G1}$ input to circuit 54 is coupled to the PG BIT3 signal and the $\overline{G2B}$ input to circuit 54 is connected to the PG BIT 3 signal. The $\overline{G1}$ input to circuit 56 is coupled to the PG BIT3 signal and the $\overline{G2B}$ input to circuit 56 is coupled to the PG BIT2 signal.

The Y0 through Y3 outputs from circuit 54 are respectively coupled to the chip select $(\overline{CS})$ inputs of the page 0 and page 1 sections 62, 64, 66 and 68. The Y4 through 7 outputs of circuit 54 are unconnected. The Y0 through Y7 outputs of circuit 56 are respectively coupled to the chip select $(\overline{CS})$ inputs of page 4, page 5, and page 6 and page 7 sections 70, 72, 74, 76, 78, 80, 82 and 84. Each of the paged ROM sections respond to address bits A0 through A12 applied thereto over address bus 16 and provides an 8 bit output signal containing the addressed data when that particular module is selected by an appropriate logic "0" signal from circuit 54 or 56.

The data outputs from each of ROM sections 58, 60, 62, 64, 66 and 68 are coupled together and applied to the data input of bus driver circuit 86. In the same manner, the data outputs from each of the modules 72, 74, 76, 78, 80; 82 and 84 are coupled together and applied to the data input of bus driver 88. At any given time, only one of these circuits, 86 or 88, may be enabled by the operation of a pair of two-to-four decoders 90 and 92 and OR gate 94. The A and B inputs to decode circuit 90 are respectively coupled to the A14 and A15 signals and the enable or $\overline{G}$ input to circuit 90 is coupled to the MEMR signal, which may be generated by means (not shown) responsive to both the $\overline{RD}$ and IO/$\overline{M}$ signals from CPU 14 whenever it is desired to read information from the memory. The Y0 output from decode circuit 90 is coupled as one input to OR gate 94 and the Y1 output from decode circuit 90 is coupled to the enable, or $\overline{G}$, input of two-to-four decode circuit 92. The A and B inputs to decode circuit 92 are respectively coupled to the PG BIT2 and PG BIT3 signals from page registers 32. The Y0 output

from decode circuit 92 is coupled as the second input to OR gate 94 and the Y1 output from decode circuit 92 is coupled to the chip select $(\overline{CS})$ input of bus driver 88. The output of OR gate 94 is coupled to the chip select $(\overline{CS})$ input of bus driver 86. Connected in this manner whenever information is read from one of the ROM sections 58, 60, 62, 64, 66 or 68, bus driver 86 is enabled and whenever information is read from one of the ROM sections 70, 72, 74, 76, 78, 80, 82 or 84, bus driver 88 is enabled. The output of each of bus drivers 86 and 88 is connected to the data bus 18, which carries the D0 through D7 data signals.

Referring now to figure 4, RAM controller 42, CAS decode 44, unpaged RAM 28 and the paged RAM 30, are shown in more detail. RAM controller 42 is enabled by a logic "0" signal being applied to the $\overline{CS}$ or chip select input thereof from logic circuit 86. This signal, as will be explained in more detail hereafter, is provided when the A15 addresss signal is logic "1" and the PG BIT3 signal is logic "0" or in other words, when the random access memory 28 and 30 is selected. As shown in figure 4, there is one unpaged block of 16K RAM and seven paged blocks of 16K RAM. Thus, only three PG BITS0—2 of the four paged register 32 signals PG BIT0—3 are required. Hence, under normal operations, the PG BIT3 signal is always kept at logic "0".

RAM controller 42 includes an address but input to which the A0 through A13 address signals are applied. In addition, there is a clock input to which the system clock of 16.432 magahertz is applied, a write $(\overline{WT})$ input to which the $\overline{MEMW}$ signal is applied, a read $(\overline{RD})$ input to which the $\overline{MEMR}$ signal is applied, a B0 input to which the A14 address signal is applied, and the chip select $(\overline{CS})$ input to which the output of logic 86 is applied. The $\overline{MEMW}$ signal is provided by logic (not shown) responsive to the $\overline{WR}$ and IO/$\overline{M}$ signals from CPU 14, whenever these signals indicate that a memory write operation is to occur.

The outputs of RAM controller 42 include the RAM address bus 46 having the RAM A0 through RAM A6 address signals provided thereon. In addition, the outputs include a $\overline{RAS0}$, $\overline{RAS1}$, $\overline{WE}$ (Write Enable) and $\overline{CAS}$ signals. The $\overline{RAS0}$ and $\overline{RAS1}$ signals are provided as row address strobes and the particular one provided is determined by the value of the A14 signal applied to the B0 input. If A14 is logic "0" then, the $\overline{RAS0}$ signal is active. If A14 is logic "1", the $\overline{RAS1}$ signal is active. The $\overline{CAS}$ signal is a column address strobe signal and is applied to CAS decode circuit 44 which may be a three-to-eight decoder.

The A, B and C inputs of three-to-eight decoder 44 are respectively coupled to the PG BIT0, PG BIT1 and PG BIT2 signals provided from page register 32. The G1 input of three-to-eight decode circuit 44 is a logic "1" signal and the $\overline{G2B}$ signal is logic "0". The $\overline{CAS}$ signal from RAM controller 42 is applied to the $\overline{G2A}$ input. The seven least significant outputs Y0—Y6 of three-to-eight decode circuit 44 are utilized and respectively

provide the $\overline{CAS1}$ through $\overline{CAS7}$ signals on CAS bus 48.

The organization of the RAM 28 and 30 is somewhat different in details than the organization of the ROM 22 and 24 shown in figure 3. Each memory module designated 96 through 130 (even numbers only) of the RAM 28 and 30 is a 32K by 1 bit module and consists of two 16K by 1 bit circuits. Each circuit is responsible to the RAM A0 through A6 address signals, the $\overline{WE}$ signal and to a $\overline{CASX}$ and $\overline{RASX}$ signal. In each block (paged or unpaged) of RAM memory, there is one circuit from each of nine individual modules, such as 96—112 (even numbers only), for providing the D0 through D7 signals plus an additional parity bit signal labeled DP. The parity bit DP is used by circuitry (not shown) in a conventional manner to determine the parity of the data provided to or from RAM memory 28 or 30.

In figure 4, 64K bytes of random access memory are shown and divided into a 16K byte unpaged base, or RAM 28 and seven pages of 16K bytes of each pages RAM 30. It should be noted that pages 3—5 inclusive are represented by the dashed lines in figure 4. Each of the memory modules 96—130 (even numbers) is divided in half so that one 16K circuit therein is part of either the base or one page and the other 16K circuit therein is part of a different page. As previously mentioned, each 16K block of memory responds to address lines RAMA0—6, a $\overline{RASX}$ signal, the $\overline{WE}$ signal and a $\overline{CASX}$ signal. For instance, the unpaged RAM 28 block is shown in the upper half of modules 96—112 (even numbers) and responds to the $\overline{RAS0}$, $\overline{WE}$ and the $\overline{CAS}$ signals as well as the RAM address bus 46 signals RAMA0—6. The lower half of the module 96—112 (even numbers only) contain page 1 of paged RAM 30 and respond to the $\overline{RAS1}$, $\overline{WE}$ and $\overline{CAS1}$ signals together with the RAM address signals RAMA0—6 on bus 46. For page 6, shown as the upper half of modules 114—130 (even numbers only), the $\overline{RAS1}$, $\overline{WE}$ and $\overline{CAS6}$ signals are applied to each of the nine 16K by 1 bit circuits of modules 114—130 (even numbers). In the same manner, the $\overline{RAS1}$, $\overline{WE}$ and $\overline{CAS7}$ signals are applied to page 7. In each case, the RAM address signals RAMA0—6 on RAM address bus 46 are also applied to each circuit. In general, for the unpaged base RAM 28, the $\overline{RAS0}$ and $\overline{CAS}$ signals are applied; and, for the various pages of the paged portion, an $\overline{RAS1}$ signal is applied to each page and one of the $\overline{CAS1}$ through $\overline{CAS7}$ signals from CAS 44 is applied to pages 1—7 respectively. Thus, it is seen that the $\overline{RAS0}$ and $\overline{RAS1}$ signals are used to determine whether base RAM 28 or pages RAM 30 is to be accessed and the $\overline{CAS}$ and $\overline{CAS1}$ through $\overline{CAS7}$ signals are used to determine which page is to be accessed.

Circuit 86, as previously mentioned, provides the chip select signal to RAM controller 42. Circuit 86 consists of NAND gate 134, AND gates 136, 138 and 140, and NOR gate 142. The two inputs to NAND gate 134 are the $\overline{AEN}$ signal from the DMA portion of CPU 14 and the IO/$\overline{M}$ signal from CPU 14. The output of NAND gate 134 is applied as one input to AND gate 136, the other input of which is the $\overline{A15}$ address signal. The output of AND gate 136 is applied to one input of each of AND gates 138 and 140. The other input to AND gate 138 is the $\overline{A14}$ signal and the other two inputs to AND gate 140 are respectively the A14 address signal and the PG BIT3 signal. The output of each of AND gates 138 and 140 are applied as the two inputs to NOR gate 142, which provides the signal to the chip select input of RAM controller 42. Coupled in this manner, the output of NOR gate 142 will be logic "0" whenever the A15 address signal is logic "1" and the PG BIT 3 signal is logic "0".

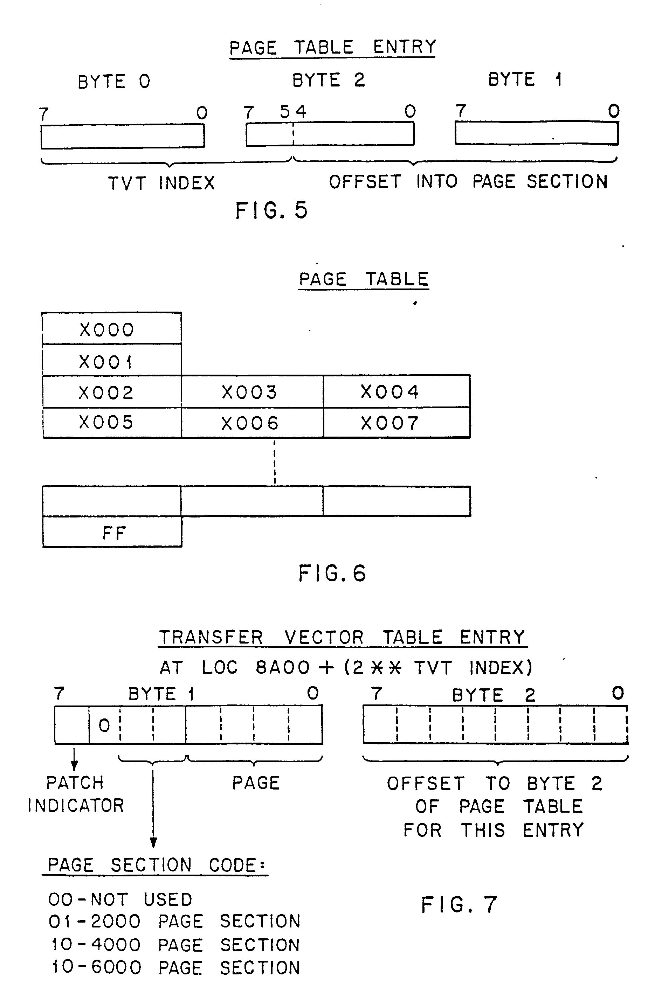

Referring now to figure 5 through 10, one technique for utilizing the paging structure shown in figures 1 through 4 will now be described. Specifically, figures 5 and 6 show diagrams useful in understanding the page table, which is present in each section of paged ROM 24 as well as in section 2 of unpaged ROM 22. Figure 7 shows a diagram useful in understanding the organization of the transfer vector table, which is built from the information stored in the page tables of each section of ROM 22 and 24 and which is present in a part of the unpaged portion of RAM 28.

Figure 5 shows one entry of a page table. Each page table entry consists of three bytes of information or 24 bits in total. Eleven of the 24 bits are utilized for containing a code referred to as the TVT index. The TVT index is a unique number for each program module. The remaining thirteen bits of information in the page table entry contain a number which is an offset into that paged section defining the exact location of the program module identified by the TVT index. The particular organization is such that the high eight bits of the TVT index are contained in byte zero of the page table entry and the low three bits are contained as bits 5, 6 and 7 of bytw two. The high five bits of the offset are contained in bits zero through 4 of byte two and the low eight bits are contained in byte one, of the page table entry.

Figure 6 shows the organization of a page table. The first two bytes in any paged section are located in addresses X000 and X001, where X=2, 4 or 6 and corresponds to the section code. Those bytes contain the high value of the first address and the high value of the last address plus one of that page section. These values are used in the initialization procedures for performing certain checks on the memory to insure that it operates properly. As such, they form no part of the present invention. Beginning with hexadecimal location X002, the first three byte page table entry occurs. The second page table entry then begins at location X005 and so forth, so that there is one entry for each program module contained in that particular ROM section. In the location immediately following the last of Nth page table entry, the data code hexadecimal "FF" is entered to mark the end of the page table. In the location immediately following the end of table marker, the code for the first program instruction of the first program module exists.

Referring now to figure 7, one entry in the transfer vector table is shown. The transfer vector table is located in a block of unpaged random access memory 30 beginning, for instance, at location 8A00 and includes a two byte entry for each page table entry in all of the sections of paged memory and the one section of unpaged memory. The transfer vector table entries are each placed in a memory location corresponding to the TVT index code, such that twice the TVT index is added to hexadecimal location 8A00. For each entry, bit 0 through 3 of byte 1 contain the page number and bits 4 and 5 contain the section code X for that page. For bits 4 and 5 the code "00" is not used; the code "01" indicates a 2000 page section, or the second part of the unpaged or base ROM 22; the code of "10" indicates a 4000 address in the page section or, in other words, the low addressed half of each page; the code "11" indicates a 6000 address in the page section or the high addressed half of each page. Bit 6 of byte 1 is always set equal to "0" and bit 7 is utilized as a patch indicator, whereby if it is a logic "1", a patch is indicated. As used herein, a patch occurs if a given program module in the ROM is replaced by a substitute program stored in the RAM. This normally occurs if a desired change to the ROM program module is made after the program has been placed in the ROM and cannot be easily changed. This may occur, for instance, if an error exists in the ROM program module.

Byte 2 of the transfer vector table entry contains an offset to the location of the second byte of the page table entry for the page and section identified in byte 1 of the transfer vector table entry. Thus, there becomes a practical limit of 84 entries which can be contained in the page table for each section.

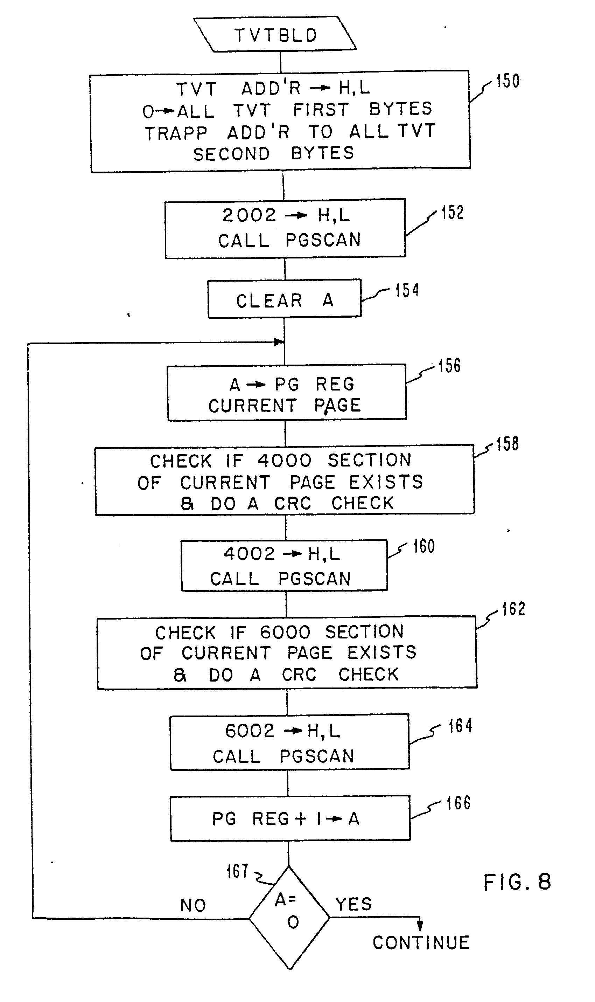

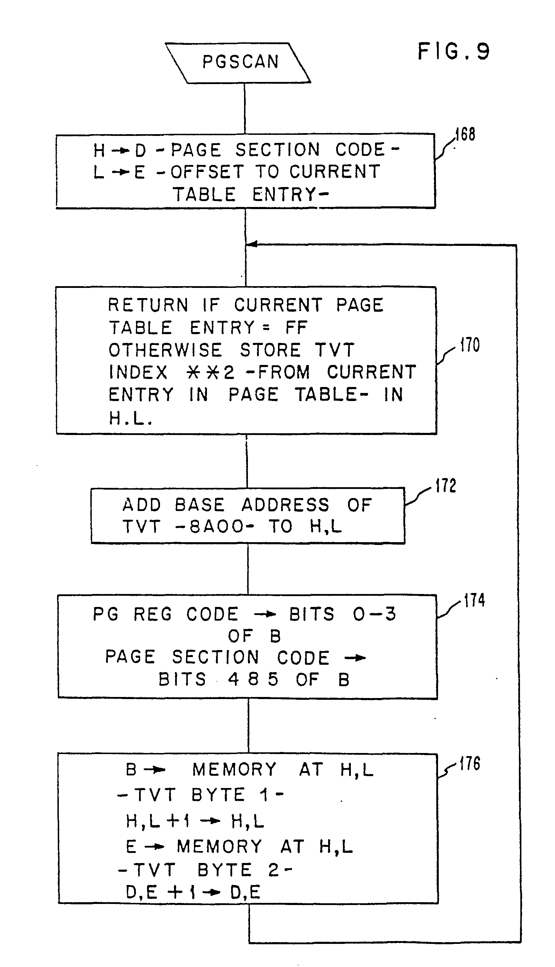

Figure 8 and 9 show a flow diagram which may be used to build the transfer vector table from the information contained in the page tables. The two sequences of operations shown in figures 8 and 9 are respectively labeled TVTBLD and PGSCAN. Both of those sequences of operations are performed as part of the initialization procedures during a power up sequence. Thus, each time power is applied to the system, the tranfer vector table is built according to the TVTBLD sequence. The programs which may be used to perform the TVTBLD and PGSCAN operations are physically placed in section 1 of the unpaged ROM 58.

Referring now specifically to figure 8, the first thing which occurs, according to block 150, is that the address of the first location of the transfer vector table (TVT) is stored in registers (HL) within CPU 14. As previously mentioned, this address may be hexadecimal 8A00. Next, all of the first bytes in the TVT table are set equal to zero and the address of the TRAPP program module is stored in the second byte of each TVT entry. This is done for the purpose of providing a jump to an error routine in the event that a particular TVT index does not exist and by mistake a jump to the location for that non-existent index is made. The TRAPP program module is located in the first section 58 of the unpaged ROM 22 and thus the second byte is an offset into section 58 of unpaged ROM 22.

Next according to block 152, the hexadecimal number 2002 is transferred to the HL registers and the PGSCAN sequence is called. The PGSCAN sequence is shown in figure 9 and will be discussed in detail hereafter. Briefly the PGSCAN sequence scans the page table for the module addressed by the HL registers and places these scanned entries from one page table into the TVT table in the unpaged RAM 28. Thereafter, according to block 154, the accumulator, or A register, is cleared.

Continuing with block 156, the data stored in the A register is applied over data bus 18 to be stored in the ROM page register. This occurs in conjunction with the WT PG REG signal from CPU 14. This data controls the page to be operated upon by the remainder of the TVTBLD sequence at this time. Next, according to block 158, a determination is made whether the 4000 section of the page number just sent to the page register 32 exists and, if so, a cycle redundancy check (CRC) is made to determine if that section is accurate. If the CRC check fails, an error is posted.

Then, according to block 160, the hexadecimal address 4002 is transferred to the HL registers and the PGSCAN sequence is called to scan the page table in the 4000 section of the page contained in the ROM page register as modified at block 156.

Then, according to blocks 162 and 164, the same procedure as was described with respect to blocks 158 and 160 is undertaken for the 6000 section for the page number outputted at block 156.

Then, at block 166, the value stored in the ROM page register in page registers 32 is read and incremented by one and stored in the accumulator. The four most significant bits are then set equal to zero and, according to block 167, a determination is made whether the value stored in the accumulator is equal to zero. If not, a return to block 156 occurs and similar processing results for the new page number determined at block 166. If at block 167 it had been determined that A was equal to zero, indicating that all of the pages had been processed, then a continuation with a remainder of the initialization sequence occurs.

Referring now to figure 9 the PGSCAN sequence is described. As recalled from blocks 152, 160 and 164 in figure 8, the PGSCAN sequence is called for the purpose of scanning one entire page table in a section of ROM 22 or 24. This sequence is called with the HL registers containing the address of the first entry of the page table, that entry being location 2002 for the second section 60 of the unpaged memory, or location 4002 for the first sections 62, 66, 70, 74, 78 or 82 of the various paged ROM or location 6002 for the second sections 64, 68, 72, 76, 80 and 84 of the various paged ROM 24.

First, according to block 168, the address code in the HL registers is stored in DE registers, the D register containing the page section code and the E register containing an offset to the current page table entry within that section. Then, according to block 170, a determination is made whether the paged table entry is equal to hexadecimal "FF", which is the end of table marker, as shown in figure 6. If this is the case, a return to the calling sequence occurs. Otherwise, the TVT index is doubled and stored in the HL registers. The TVT index is obtained from byte 0 and the three most significant bits of byte 2 of the current entry in the paged table addressed by the DE registers. Then, according to block 172, the base address of the TVT table, which is hexadecimal 8A00, is added to the doubled TVT index stored in the HL registers. At this point, the HL registers contain the correct address in the TVT table for the page table entry being scanned.

Thereafter, according to block 174, the ROM page register in page registers 32 is read and the data is stored in bit positions 0—3 of a register (B). In addition, the paged section code, which is obtained from the D register, is stored in bit positions 4 and 5 in the B register. Bit positions 6 and 7 are set to 0. Thus, byte 1 of the TVT table entry is contained in the B register. Then, according to block 176, the contents of the B register is stored in the TVT table at the address contained in the HL registers. The HL registers value is then incremented by one and the contents of the E register, which is the offset to the current page table entry, is stored in the TVT table at the address then contained in the HL registers. Thereafter, the contents of the DE register is incremented by one and return to block 170 occurs and the next page table entry is scanned and transferred to the TVT table. This continues until the end of the table marker is identified at block 170.

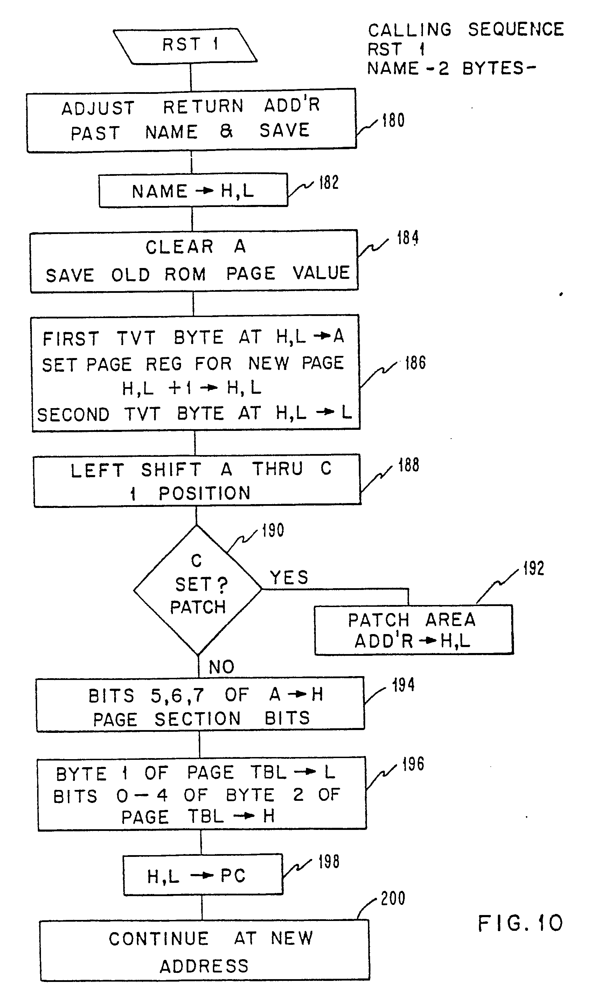

Referring now to figure 10, the sequence RST1 is shown in a flow diagram format and is used whenever a transfer from one program module to another program module is to occur. An instruction (RST instruction) is used as a restart instruction and automatically causes a predetermined address located in unpaged ROM to be placed in the program counter with the saving of certain information in the stack. On the next machine cycle, the instruction at the predetermined RST location will be executed. Whenever it is desired to cause a transfer from one program module to another, such as by the conventional call instruction or jump instruction, the calling sequence is the RST1 instruction followed by a two byte NAME code which identifies the particular module to be called and contains the address of that program modulus entry in the TVT index table. First, according to block 180, the saved return address which normally is the address immediately following the RST1 instruction is adjusted to the address following the NAME code. The, according to block 182, bytes 1 and 2 of the NAME code are stored in the HL registers and thus, the HL registers address the desired TVT table entry of the called program. Thereafter, according to block 184, the accumulator, or A register, is cleared and the then existing information in the ROM page register in page registers 32 is read and saved on the stack.

Then, according to block 186, the first TVT table byte, which is then addressed by the HL registers, is read from the random access memory and stored in the A register. The low four bits of information in the A register is then transmitted to page registers 32 to set the ROM page register to the page specified in byte 1 of the TVT index for the called program. Thereafter, the HL register is incremented by 1 and the second TVT byte, as then addressed by the HL registers, is read and stored in the L register. Then, according to block 188, the TVT byte in the A register is left shifted through carry one position and a determination is made at block 190 whether the carry indicator is set.

It it is, a patch is indicated and as indicated in block 192, the patch area address is transferred to the HL registers and processing continues by transferring the program fetch operation to the patch area of the RAM.

Assuming that the carry indicator is not set at block 190, then according to block 194, bits 5, 6 and 7 of the A register, which contain the page section bits left shifted one position, are transferred to the H register. At this point in time, the H register contains a code of hexadecimal 20, 40 or 60 and the L register contains the offset to byte 2 of the proper page table entry.

Continuing at block 196, the offset into the paged section contained by byte 1 and bits 0 through 4 of byte 2 of the address page table entry are transferred to the HL registers. It should be noted that the page section bits contained in the H register are maintained during this transfer operation. Thus, the HL registers at this point contain the address of the called program routine. Then, according to block 198, the address contained in the HL registers is transferred to the program counter (PC) in CPU 14 and at block 200, a continuation occurs with the program counter causing the fetching of instructions from the new address therein and execution of the called routine is begun.

Thus, it is seen that by using the simple sequence of operations described with respect to figure 10, the transfer of instruction execution between pages can be easily accomplished. This technique allows for simplicity in programming because it is not necessary to know the exact location in read only memory of every program module being developed during the development of the software. One merely assigns a unique index code to a particular program module as it is being programmed. The, that program module can be fit into a particular page where room exists and maximum utilization of the memory can be achieved. In addition, the sequences of operations allows for correcting the program modules by utilizing a patch technique. If desired, the program modules can also be modified by including all modified program modules in the highest section of ROM. This section's page table is scanned last and if an identical TVT index number exists, the information previously in the TVT table will be written over by the information in the higher ordered ROM section.

Several variations of the use of the paging technique can be made to the technique described above. A three byte TVT entry could be used whereby the actual address of the new program module is stored in bytes two and three. In this instance, direct addressing of the new program module can occur without using the offset in the page table entry.

Another variation involves placing the TVT index of program modules which are frequently called in a special section of the TVT table. Such a special section may be, for example, between locations 8C00 and 8DFF and would contain TVT index between decimal 256 and 511. For these program modules, a different restart instruction would be used, and the NAME code could be a single byte. The single NAME byte is then placed in the L register and hexadecimal 46 is placed in the H register. Then the value in the HL registers are doubled (due to the two byte length of each TVT table entry) and the processing continues as described from block 184 through 200. This procedure saves one byte of storage each time one of these frequently used modules is called.

It should be noted that conventional call and jump instructions may be used when transferring to program modules located in the unpaged ROM 22. Thus, the most frequently called program modules should be placed in unpaged ROM 22 to the extent space is available. This conserves processing time since there is not necessity to refer to the TVT table.

**Claims**

1. Page addressing mechanism in a computer system having memory means divided into addressable pages (22, 24, 28, 30), and a processing unit (14) which provides control signals (20) manifesting a type of memory operation to be performed, said page addressing mechanism including addressing means (26, 42) for addressing the pages of said memory means, a plurality of register means (32) each of which is separately programmable by said processing unit to store data capable of being selectively provided as page signals (34) for selecting one page of said memory means, each of said register means being associated with a distinct type of memory operation, and decoding means (36) responsive to said control signals for selecting one of said register means to be enabled to provide said page signals; said page addressing mechanism being characterized in that:

said memory means comprises a first portion of random access memory formed of a first plurality of pages (28, 30), and a second portion of read only memory formed of a second plurality of pages (22, 24) for storing a plurality of program modules each of which being identified by a program module identification code,

each page of said read only memory includes at least one page section comprising a page table with a plurality of entries, each entry containing one program module identification code in that section and a code manifesting the address in that section for that one program module, and

a page of said random access memory includes a transfer vector table which is addressed in accordance with the identification code of each program module and includes a pointer to the page section of the page in which the program module having said identification code resides, whereby a pointer for an identification code of a program module different from the program module currently executed can be looked up to obtain the address of said different program module and to select the page of said read only memory in which said different program module resides.

2. Page addressing mechanism according to Claim 1 characterized in that said decoding means (36) includes means responsive to said control signals and to a plurality of programming signals, said control signals controlling those of said programming signals which are provided as decoding means signals, said decoding means signals being applied to said register means (32) to select which register means is to provide the data stored thereby as said page signals.

3. Page addressing mechanism according to Claims 1 or 2 characterized in that said plurality of register means (32) includes a programmable file.

4. Page addressing mechanism according to Claims 1, 2 or 3 characterized in that each of said register means (32) stores a code related to one type of memory operation.

5. Page addressing mechanism according to Claim 4 characterized in that said processor unit (14) includes means for changing the code stored by said register means (32).

6. Page addressing mechanism according to any one of the preceding claims characterized in that said register means (32) includes a first, a second and a third page register, said first page register being selected to provide said page signals whenever a read data operation occurs with respect to said read only memory, said second page register being selected to provide said page signals whenever a read page operation occurs with respect to said random access memory, and said third page register being selected to provide said page signals whenever a write data operation occurs with respect to said random access memory.

7. Page addressing mechanism according to Claim 6 characterized in that said decoding means (36) responds to the address signals and the control signals to select one of said first, second and third page registers.

8. Page addressing mechanism according to any one of the preceding claims characterized in that said register means (32) includes a programmable multiword by multibit register file and logic means associated with said file for decoding signals applied thereto from said decoding means (36) and addressing one of said words of said file, said addressed word providing said page signals.

9. Page addressing mechanism according to any one of the preceding claims characterized in that said decoding means (36) includes a plurality of data inputs coupled to selected address signals, a plurality of selection inputs coupled to said control signals, and at least one output at which is provided a signal related to one of said signals applied to said data input, said one signal being selected in accordance with the state of said control signal applied to said selection inputs.

10. Page addressing mechanism according to Claim 9 characterized in that said control signals coupled to said selection inputs of said decoding means (36) manifest whether a read or a write operation is to be performed and whether the manifested operation is to be performed with respect to said memory means or said register means (32), said address signals coupled to said data inputs of said decoding means being chosen to select one word of said file as indicated by said control signals.

11. Page addressing mechanism according to any one of the preceding claims characterized in that each transfer vector table pointer includes a first code indicating the page section and a second code indicating an offset into that page section at which the page table entry for said different program module is tabulated.

12. Page addressing mechanism according to Claim 11 characterized in that said page table code manifesting said address is an offset into said page section of the location at which the first instruction of said different program module exists; a code manifesting the page section and said page table entry offset being stored in a register.

13. Page addressing mechanism according to Claim 12 characterized in that each page table contains one entry for each program module identification code in the page section in which the page table is tabulated, said transfer vector table being addressed at a location derived from the program module identification code for each page table entry.

**Patentansprüche**

1. Seitenadressiermechanismus in einem Computersystem mit Speichermitteln, die in adressierbare Seiten (22, 24, 28, 30) untergeteilt sind und eine Prozessoreinheit (14), welche Steuersignale (20) liefert, die einen Typ der auszuführenden Speicherarbeit anzeigen, wobei besagter Seitenadressiermechanismus Adressiermittel (26, 42) enthält, um die Seiten der besagten Speichermittel zu adressieren, eine Mehrzahl von Registermitteln (32), von denen jedes von der besagten Prozessoreinheit getrennt programmierbar ist, um Daten zu speichern, welche wahlweise als Seitensignale (34) für die Auswahl einer Seite aus besagten Speichermitteln bereitgestellt werden können, wobei jedes der besagten Registermittel einem eingenen Typ der Speicherarbeit zugeordnet ist, und Dekodiermittel (36), die auf die besagten Steuersignale ansprechen, um eines der besagten Registermittel auszuwählen, die befähigt werden sollen, besagte Seitensignale bereitzustellen; besagter Seitenadressiermechanismus dadurch gekennzeichnet dass:

besagte Speichermittel einen ersten RAM-Speicherabschnitt enthalten, bestehend aus einer ersten Mehrzahl von Seiten (28, 30) und einen zweiten ROM-Speicherabschnitt, bestehend aus einer Mehrzahl von Seiten (22, 24) für die Speicherung einer Mehrzahl von Programmodulen, von denen jedes durch einen Programm-modulidentifizierungskode gekennzeichnet ist,

wobei jede Seite des besagten ROM-Speichers mindestens einen Seitenabschnitt enthält, der eine Seitentabelle mit einer Mehrzahl von Eingängen enthält, und jeder Eingang einen Programmodulidentifizierungskode in diesem Abschnitt enthält und einen Kode, der die Adresse in diesem Abschnitt für dieses eine Programm-modul anzeigt, und

eine Seite des besagten RAM-Speichers eine Übertragungsvektortabelle enthält, welche in Übereinstimmung mit dem Identifizierungskode eines jeden Programmoduls adressiert wird, und einen Zeiger zu dem Seitenabschnitt der Seite enthält, in dem sich das Programmodul mit dem besagten Identifizierungskode befindet, wodurch ein Zeiger für einen Identifizierungskode eines anderen Programmoduls als das gerade ausgeführte Programmodul geprüft werden kann, um die Adresse des besagten anderen Programmoduls zu erhalten und die Seite des besagten ROM-Speichers auszuwählen, in dem sich das andere Programmodul befindet.

2. Seitenadressiermechanismus gemäss Anspruch 1, dadurch gekennzeichnet, dass die besagten Dekodiermittel (36) Mittel enthalten, die auf besagte Steuersignale ansprechen, und auf eine Mehrzahl von Programmiersignalen, wobei besagte Steuersignale diejenigen der besagten Programmiersignale steuern, welche als Dekodiermittelsignale bereitgestellt werden und besagte Dekodiermittelsignale an besagte Registermittel (32) angelegt werden, um die Registermittel auszuwählen, die darin gespeicherte Daten als Seitensignale bereitstellen sollen.

3. Seitenadressiermechanismus gemäss Anspruch 1 oder 2, dadurch gekennzeichnet, dass die besagte Mehrzahl von Registermitteln (32) eine programmierbare Datenreihe enthält.

4. Seitenadressiermechanismus gemäss Anspruch 1, 2 oder 3, dadurch gekennzeichnet, dass jedes der besagten Registermittel (32) einen Kode speichert, der sich auf einen Speichervorgangstyp bezieht.

5. Seitenadressiermechanismus gemäss Anspruch 4, dadurch gekennzeichnet, dass besagte Prozessoreinheit (14) Mittel für die Änderung des gespeicherten Kodes durch besagte Registermittel (32) enthält.

6. Seitenadressiermechanismus gemäss einem der vorangehenden Ansprüche, dadurch gekennzeichnet, dass besagtes Registermittel (32) ein erstes, ein zweites und ein drittes Seitenregister enthält, wobei besagtes erstes Seitenregister ausgewählt wird, um besagte Seitensignale bereitzustellen, immer wenn ein Datenlesevorgang in Bezug auf besagten Lesespeicher anfällt, und besagtes zweites Seitenregister gewählt wird, besagte Seitensignale bereitzustellen, wenn ein Seitenlesevorgang in Bezug auf besagten RAM-Speicher anfällt, und besagtes drittes Seitenregister ausgewählte wird, um die besagten Seitensignale bereitzustellen, immer wenn ein Datenschreibvorgang in Bezug auf besagten RAM-Speicher anfällt.

7. Seitenadressiermechanismus gemäss Anspruch 6, dadurch gekennzeichnet, dass besagte Dekodiermittel (36) auf besagte Adresssignale und Steuersignale ansprechen, um eines der besagten ersten, zweiten und dritten Seitenregister auszuwählen.

8. Seitenadressiermechanismus nach einem der vorangehenden Ansprüche, dadurch gekennzeichnet, dass besagtes Registermittel (32) eine programmierbare Registerdatei mit mehreren Worten mal mehreren Bits enthält, und der besagten Datei zugeordnete logische Mittel zum Dekodieren der an sie angelegten Signale von den besagten Dekodiermitteln (36) und zum Adressieren eines der besagten Worter der besagten Datei, wobei das besagte adressierte Wort besagte Seitensignale bereitstellt.

9. Seitenadressiermechanismus gemäss einem der vorangehenden Ansprüche, dadurch gekennzeichnet, dass besagte Kodiermittel (36) eine Mehrzahl von Dateneingängen enthalten, die an ausgewählte Adressignale gekoppelt sind, und eine Mehrzahl von Auswahleingängen, die an besagte Steuersignale gekoppelt sind, und mindestens einen Ausgang, an dem ein Signal bereitgestellt wird, das sich auf eines der besagten Signale bezieht, welche an den besagte Dateneingang angelegt werden, wobei das besagte eine Signale gemäss dem Zustand des besagten Steuersignals ausgewählt wird, das an besagte Auswahleingänge angelegt wird.

10. Seitenadressiermechanismus gemäss Anspruch 9, dadurch gekennzeichnet, dass besagte Steuersignale, die an besagte Auswahleingänge der besagten Dekodiermittel (36) gekoppelt sind, anzeigen, ob ein Lese- oder Schreibvorgang ausgeführt werden soll und ob der angezeigte Vorgang in Bezug auf die besagten Speichermittel oder die besagten Registermittel (32) ausgeführt werden soll, wobei besagte Adressignale an besagte Dateneingänge der besagten Kodiermittel gekoppelt sind, die gewählt wurden, um ein Wort der besagten Datei auszuwählen, die durch besagte Steuersignale angegeben ist.

11. Seitenadressiermechanismus gemäss einem der vorangehenden Ansprüche, dadurch gekennzeichnet, dass jeder Transfervektortafelzeiger einen ersten Kode enthält, der den Seitenabschnitt anzeigt, und einen zweiten Kode, der eine Versetzung in diesem Seitenabschnitt anzeigt, an dem der Seitentabelleneingang für das besagte einzelne Programmodul tabuliert ist.

12. Seitenadressiermechanismus gemäss Anspruch 11, dadurch gekennzeichnet, dass besagter Seitentabellenkode, der die besagte Adresse anzeigt, eine Versetzung der Stelle im besagten Seitenabschnitt ist, an der die erste Anweisung des besagten anderen Programmoduls existiert; und ein Kode, der den Seitenabschnitt und den besagten Seitentafeleingangs-Versetzungswert anzeigt, in einem Register gespeichert wird.

13. Seitenadressiermechanismus gemäss Anspruch 12, dadurch gekennzeichnet, dass jede Seitentabelle einen Eingang für jeden Programmodulidentifizierungskode enthält, in dem Seitenabschnitt, in dem die besagte Seitentabelle tabuliert ist, und besagte Transfervektortabelle an einer Stelle adressiert wird, die vom Programmodulidentifizierkode für jeden Seitentabelleneingang abgeleitet ist.

**Revendications**

1. Dispositif d'adressage de page dans un système de calculateur comportant une mémoire divisée en pages adressables (22, 24, 28, 30) et un processeur (14) qui produit des signaux de commande (20) définissant un type d'opération de mémoire à effectuer, ledit dispositif comprenant des moyens d'adressage (26, 42) pour adresser les pages de ladite mémoire, une pluralité de reigstres (32) dont chacun peut être individuellement programmé par ledit processeur pour stocker des données pouvant être engendrées de façon sélective sous la forme de signaux de page (34) pour sélectionner l'une des pages de ladite mémoire, chacun desdits registres étant associé à un type distinct d'opération de mémoire, et des moyens de décodage (36) permettant, en réponse auxdits signaux de commande, de sélectionner l'un desdits registres afin qu'il produise lesdits signaux de page, ledit dispositif d'adressage de page étant caractérisé en ce que:

ladite mémoire comprend une première partie constituée par une mémoire à accès sélectif comportant une première pluralité de pages (28, 30), et une seconde partie constituée par une mémoire morte comportant une seconde pluralité de pages (22, 24) pour stocker une pluralité de modules de programme dont chacun est identifié au moyen d'un code d'identification distinct,

chaque page de ladite mémoire morte comprend au moins une partie de page comportant une table de page et une pluralité d'entrées dont chacune contient un code d'identification de module de programme dans ladite partie de page et un code indiquant l'adresse dans cette partie de ce module de programme, et

une page de ladite mémoire à accès sélectif comprend une table de vecteurs de transfert adressée en fonction du code d'identification de chaque module de programme et un pointeur indiquant la partie de la page dans laquelle réside le module de programme identifié par ledit code, un pointeur afférent au code d'identification d'un module de programme différent de celui en cours d'exécution pouvant de ce fait être consulté pour obtenir l'adresse dudit module de programme différent et sélectionner la page de ladite mémoire morte dans laquelle réside de dernier module.

2. Dispositif d'adressage de page selon la revendication caractérisé en ce que lesdits moyens de décodage (36) comprennent des moyens qui répondent auxdits signaux de commande et à une pluralité de signaux de programmation, lesdits signaux de commande commandant ceux desdits signaux de programmation qui se présentent sous la forme de signaux engendrés par lesdits moyens de décodage, ces derniers signaux étant appliqués auxdits registres (32) pour sélectionner celui d'entre eux qui devra produire sous la forme desdits signaux de page les données stockées dans celui-ci.

3. Dispositif d'adressage de page selon la revendication 1 ou 2, caractérisé en ce que ladite pluralité de registres (32) comprend un fichier programmable.

4. Dispositif d'adressage de page selon les revendications 1, 2 ou 3, caractérisé en ce que chacun desdits registres (32) stocke un code associé à un type donné d'opération de mémoire.

5. Dispositif d'adressage de page selon la revendication 4, caractérisé en ce que ledit processeur (14) comprend des moyens permettant de modifier le code stocké dans lesdits registres (32).

6. Dispositif d'adressage de page selon l'une quelconque des revendications précédentes, caractérisé en ce que lesdits registres (32) comprennent un premier, un second et un troisième registres de page, ledit premier registre de page étant sélectionné pour produire lesdits signaux de page chaque fois qu'une opération de lecture de données a lieu dans ladite mémoire morte, ledit second registre de page étant sélectionné pour produire lesdits signaux de page haque fois qu'une opération de lecture de page a lieu dans ladite mémoire à accès sélectif, et ledit troisième registre de page étant sélectionné pour produire lesdits signaux de page chaque fois qu'une opération d'écriture de données a lieu dans ladite mémoire à accès sélectif.

7. Dispositif d'adressage de page selon la revendication 6, caractérisé en ce que lesdits moyens de décodage (36), en réponse aux signaux d'adresse et aux signaux de commande, sélectionnent l'un desits premier, second et troisième registres de page.

8. Dispositif d'adressage de page selon l'une quelconque des revendications précédentes, caractérisé en ce que lesdits registres (32) comprennent un fichier programmable à mots multiples, et des moyens logiques associés audit fichier pour décoder les signaux qui lui sont appliqués depuis lesdits moyens de décodage (36) et adresser l'un desdits mots dudit fichier, ledit mot adressé produisant lesdits signaux de page.

9. Dispositif d'adressage de page selon l'une quelconque des revendications précédentes, caractérisé en ce que lesdits moyens de décodage (36) comprennent une pluralité d'entrées de données auxquelles sont appliqués des signaux d'adresse sélectionnés, une pluralitré d'entrées de sélection auxquelles sont appliqués lesdits signaux de commande, et au moins une sortie où est obtenu un signal associé à l'un desdits signaux appliqués à ladite entrée de données, ledit signal étant sélectionné en fonction de l'état dudit signal de commande appliqué auxdites entrées de sélection.

10. Dispositif d'adressage de page selon la revendication 9, caractérisé en ce que lesdits signaux de commande appliqués auxdites entrées de sélection desdits moyens de décodage (36) indiquent si une opération de lecture ou d'écriture doit être effectuée et si elle intéresse ladite mémoire ou lesdits registres (32), lesdits signaux d'adresse appliquées auxdites entrées de données desdits moyens de décodage étant choisis de façon à permettre de sélectionner l'une des mots dudit fichier indiqué par lesdits signaux de commande.

11. Dispositif d'adressage de page selon l'une quelconque des revendications précédentes, caractérisé en ce que chaque pointeur de la table de vecteurs de transfert comprend un premier code désignant la partie de page concernée et un second code indiquant un déplacement dans cette partie de page où se trouve l'entrée de la table de page relative audit module de programme différent.

12. Dispositif d'adressage de page selon la revendication 11, caractérisé en ce que ledit code de table de page indiquant ladite adresse est un déplacement dans ladite partie de page de l'emplacement où se trouve la première instruction dudit module de programme différent, un code indiquant la partie de page et ledit déplacement de l'entrée de la table de page étant stocké dans un registre.

13. Dispositif d'adressage de page selon la revendication 12, caractérisé en ce que chaque table de page contient une entrée distincte pour chaque code d'identification de module de programme dans la partie de page où se trouve cette table, ladite table de vecteurs de transfert étant adressée à un emplacement qui est fonction du code d'identification de module de programme pour chaque entrée de la table de page.

FIG. 1

FIG. 2

FIG. 3A

FIG. 3B

FIG. 3

| FIG. 3A |
|---------|
| FIG. 3B |

0 057 815

FIG. 4

0 057 815

PAGE TABLE ENTRY

| BYTE 0 | BYTE 2 | BYTE 1 |
|--------|--------|--------|
| 7       0 | 7   5 4     0 | 7       0 |

TVT INDEX      OFFSET INTO PAGE SECTION

FIG. 5

PAGE TABLE

| X000 | | |
|------|------|------|
| X001 | | |
| X002 | X003 | X004 |
| X005 | X006 | X007 |

| | | |
|------|------|------|
| FF | | |

FIG. 6

TRANSFER VECTOR TABLE ENTRY

AT LOC 8A00 + (2 ✳✳ TVT INDEX)

| 7    BYTE 1    0 | 7    BYTE 2    0 |
|---|---|
| 0 | |

PATCH    PAGE       OFFSET TO BYTE 2
INDICATOR             OF PAGE TABLE
                   FOR THIS ENTRY

PAGE SECTION CODE:

00 - NOT USED
01 - 2000 PAGE SECTION
10 - 4000 PAGE SECTION
10 - 6000 PAGE SECTION

FIG. 7

6

FIG. 8

TVTBLD

TVT ADD'R → H,L
0 → ALL TVT FIRST BYTES
TRAPP ADD'R TO ALL TVT
SECOND BYTES — 150

2002 → H,L
CALL PGSCAN — 152

CLEAR A — 154

A → PG REG
CURRENT PAGE — 156

CHECK IF 4000 SECTION
OF CURRENT PAGE EXISTS
& DO A CRC CHECK — 158

4002 → H,L
CALL PGSCAN — 160

CHECK IF 6000 SECTION
OF CURRENT PAGE EXISTS
& DO A CRC CHECK — 162

6002 → H,L
CALL PGSCAN — 164

PG REG + I → A — 166

167 — A = 0
NO   YES

CONTINUE

7

FIG.9

```
        ╱‾‾‾‾‾‾‾‾‾‾‾‾╲
       ╱   PGSCAN    ╲
      ╱‾‾‾‾‾‾‾‾‾‾‾‾‾‾‾╲
              │
    ┌─────────────────────────┐  168
    │ H → D - PAGE SECTION CODE-│
    │ L → E - OFFSET TO CURRENT │
    │      TABLE ENTRY-         │
    └─────────────────────────┘
              │
    ┌─────────────────────────┐
    │ RETURN IF CURRENT PAGE   │
    │ TABLE ENTRY = FF         │
    │ OTHERWISE  STORE  TVT    │  170
    │ INDEX ✳✳2 -FROM CURRENT  │
    │ ENTRY IN PAGE TABLE- IN  │
    │ H.L.                     │
    └─────────────────────────┘
              │
    ┌─────────────────────────┐  172
    │ ADD BASE ADDRESS OF      │
    │ TVT -8A00- TO H,L        │
    └─────────────────────────┘
              │
    ┌─────────────────────────┐  174
    │ PG REG CODE → BITS 0-3   │
    │         OF B             │
    │ PAGE SECTION CODE →      │
    │    BITS 4 8 5 OF B       │
    └─────────────────────────┘
              │
    ┌─────────────────────────┐  176
    │ B → MEMORY AT H,L        │
    │ -TVT BYTE 1-             │
    │ H,L+1 → H,L              │
    │ E → MEMORY AT H,L        │
    │ -TVT BYTE 2-             │
    │ D,E+1 → D,E              │
    └─────────────────────────┘
```

8

0 057 815

CALLING SEQUENCE
RST 1
NAME -2 BYTES-

RST 1

ADJUST RETURN ADD'R PAST NAME & SAVE — 180

NAME → H,L — 182

CLEAR A SAVE OLD ROM PAGE VALUE — 184

FIRST TVT BYTE AT H,L → A
SET PAGE REG FOR NEW PAGE
H,L +1 → H,L
SECOND TVT BYTE AT H,L → L — 186

LEFT SHIFT A THRU C 1 POSITION — 188

C SET ? PATCH — 190

YES — 192

PATCH AREA ADD'R → H,L

NO

BITS 5,6,7 OF A → H PAGE SECTION BITS — 194

BYTE 1 OF PAGE TBL → L
BITS 0−4 OF BYTE 2 OF PAGE TBL → H — 196

H,L → PC — 198

CONTINUE AT NEW ADDRESS — 200

FIG. 10

9